# EUROPÄISCHE PATENTSCHRIFT

(11) **EP 4 042 537 B1**
(45) Veröffentlichungstag und Bekanntmachung des Hinweises auf die Patenterteilung: **20.12.2023**
(21) Anmeldenummer: 20772278.6
(22) Anmeldetag: 15.09.2020
(51) Int. Cl.: H02J 1/10

(54) **VERFAHREN ZUM BETRIEB EINER ENERGIEERZEUGUNGSANLAGE UND ENERGIEERZEUGUNGSANLAGE MIT DEM VERFAHREN**
METHOD FOR OPERATING AN ENERGY GENERATING SYSTEM, AND ENERGY GENERATING SYSTEM COMPRISING SAID METHOD
PROCÉDÉ DE FONCTIONNEMENT DE SYSTÈME DE PRODUCTION D'ÉNERGIE ET SYSTÈME DE PRODUCTION D'ÉNERGIE COMPRENANT LEDIT PROCÉDÉ

(30) Priorität: 09.10.2019 DE 102019127198
(43) Veröffentlichungstag der Anmeldung: 17.08.2022
(73) Patentinhaber: SMA Solar Technology AG, 34266 Niestetal (DE)
(72) Erfinder: HERMELING, Dirk, 32469 Petershagen (DE); FALK, Andreas, 34131 Kassel (DE)
(86) Internationale Anmeldenummer: PCT/EP2020/075742
(87) Internationale Veröffentlichungsnummer: WO 2021/069181

(56) Entgegenhaltungen:
- US-A1- 2012 319 489

## Beschreibung

### Technisches Gebiet der Erfindung

Die Erfindung betrifft ein Verfahren zum Betrieb einer Energieerzeugungsanlage (EEA). Insbesondere betrifft die Erfindung den Betrieb einer EEA, bei dem ein Fehlerfall innerhalb der EEA erkannt und dessen schädigende Auswirkung auf Komponenten der EEA vermieden, zumindest jedoch reduziert wird. Bei der EEA kann es sich insbesondere um eine regenerative EEA mit mehreren DC-Teilgeneratoren handeln, die parallel zueinander und jeweils über einen DC/DC-Wandler an eine gemeinsame DC-Last angeschlossen sind, um diese zu versorgen. Ein Fehlerfall kann dabei insbesondere dann vorliegen, wenn eine, gegebenenfalls auch mehrere der DC-Teilgeneratoren, einen Fehler, beispielsweise einen Kurzschlussfehler aufweisen. Die Erfindung betrifft weiterhin eine EEA, die für ein derartiges Verfahren ausgelegt und eingerichtet ist.

### Stand der Technik

Bei dem sogenannten Power-to-Gas Verfahren wird elektrische Energie durch einen Elektrolyseur in einen gasförmigen Energieträger, insbesondere in Wasserstoff gewandelt. Bei der elektrischen Energie kann es sich vorteilhafterweise um regenerativ erzeugte elektrische Energie handeln. Bei derartigen Verfahren kann der Elektrolyseur und die den Elektrolyseur versorgende regenerative EEA in Form eines Inselnetzes miteinander verbunden sein, welches gar nicht oder nur temporär mit einem mit einer Wechselspannung operierenden öffentlichen Energieversorgungsnetz (EVN) verbunden ist.

Viele der regenerativen Energiequellen sind oftmals von Natur aus als DC-Quellen ausgebildet. Da der Elektrolyseur als ein DC-Verbraucher operiert, ist es im Hinblick auf eine Vermeidung von Wandlungsverlusten vorteilhaft, wenn das Inselnetz ebenfalls als DC-Netz ausgebildet ist. Beispielsweise kann die EEA innerhalb des Inselnetzes mehrere als Photovoltaik (PV) - Teilgeneratoren ausgelegte DC-Teilgeneratoren aufweisen, die jeweils über einen DC/DC-Wandler und parallel zueinander mit einem Eingang des Elektrolyseurs oder einer anderen DC-Last verbunden sind. Über die DC/DC-Wandler kann eine Spannung der DC-Teilgeneratoren von einer Spannung am Eingang des Elektrolyseurs entkoppelt werden. Jede der DC-Teilgeneratoren kann somit in seinem jeweiligen Punkt maximaler Leistung (MPP = Maximum Power Point) betrieben werden und dennoch mit einer für alle DC/DC-Wandler gleichen Ausgangsspannung den Elektrolyseur versorgen. Dabei lässt sich über die Ausgangsspannung der DC/DC-Wandler ein Arbeitspunkt des Elektrolyseurs, insbesondere dessen Leistungsverbrauch einstellen. Konkret kann eine übergeordnete Steuerungseinheit die Ausgangsspannung der DC/DC-Wandler derart regeln, dass einerseits stets ein Gleichgewicht zwischen insgesamt erzeugter und verbrauchter Leistung in dem Inselnetz herrscht, und andererseits stets die maximal mögliche Leistung an regenerativ erzeugter Leistung der PV-Teilgeneratoren geerntet werden kann.

Wenn nun eine, gegebenenfalls auch mehrere, der als DC-Teilgeneratoren operierenden PV-Teilgeneratoren einen Fehler, beispielsweise einen Kurzschlussfehler oder einen doppelten Isolationsfehler aufweist, so speisen die fehlerfrei operierenden DC-Teilgeneratoren ihre Leistung in den einen fehlerbehafteten DC-Teilgenerator (oder gegebenenfalls in die mehreren fehlerbehafteten DC-Teilgeneratoren). Üblicherweise umfasst ein DC-Teilgenerator eine oder auch mehrere DC-Quellen. Dabei sind die DC-Quellen eines DC-Teilgenerators - je nach Größe der EEA - über eine oder auch mehrere Sicherungen mit dem dem DC-Teilgenerator zugeordneten DC/DC-Wandler verbunden. Bei einem in Frage stehenden Fehlerfall innerhalb der EEA kann es jedoch vorkommen, dass ein resultierender Strom von den fehlerfreien DC-Quellen der EEA in die fehlerbehaftete DC-Quelle nicht ausreichend hoch ist, um zumindest eine der Sicherungen, über die die fehlerbehaftete DC-Quelle mit ihrem zugeordneten DC/DC-Wandler verbunden ist, auszulösen. Es besteht somit das Risiko, dass bei einem Fehlerfall der erzeugte Fehlerstrom ohne weitere Massnahmen nicht ausreicht, um die fehlerbehaftete DC-Quelle durch ein Auslösen einer der fehlerbehafteten DC-Quelle nachgeschalteten Sicherung von den restlichen fehlerfrei operierenden DC-Quellen zu trennen. Der einen Fehlerstrom darstellende resultierende Strom wird nicht sicher unterbrochen und kann, je nach Stromstärke und Dauer des Fehlerstroms, weitere Komponenten der EEA, insbesondere den betroffenen DC/DC-Wandler schädigen oder gar zerstören.

Die Schrift DE 10 2015 007 443 A1 offenbart ein Verfahren und eine Vorrichtung zur ergänzenden Einspeisung von Strom aus zumindest einer Stromquelle in ein Endstromnetz mit mehreren Verbrauchsstellen. Das Endstromnetz ist an eine übergeordnete Stromversorgung angeschlossen wobei die Verbrauchsstellen über zumindest eine Überstromsicherung gegen die übergeordnete Stromversorgung abgesichert sind. Eine Steuereinheit erfasst den aus der übergeordneten Stromversorgung zufließenden Strom und den aus der Stromquelle in das Endstromnetz fließenden Strom. Der aus den Strömen gebildete augenblickliche Summenwert wird mit einem vorgegebenen Maximalstrom verglichen, um bei Überschreiten des Maximalstroms den aus der Stromquelle zufließenden Strom abzusenken. Über das Verfahren kann ein Überlastfall in dem Endstromnetz verhindert werden.

Die Druckschrift DE 10 2013 111 869 A1 offenbart eine PV-Anlage mit einem Wechselrichter, der über ein AC-Trennorgan mit einem Energieversorgungsnetz verbunden ist, sowie mindestens einem PV-Teilgenerator, der jeweils mindestens einen PV-String aufweist und der über DC-Leitungen mit einem DC-Anschlussbereich des Wechselrichters verbunden ist. Dem PV-Teilgenerator sind eine generatornahe DC-Trenneinheit, ein in Energieflussrichtung beim Einspeisen nachgeschalteter DC-Kurzschlussschalter zum Kurzschließen des mindestens einen PV-Strings und ein dem DC-Kurzschlussschalter in Energieflussrichtung nachgeschalteter Rückstromschutz zugeordnet. Weiterhin ist in der Energieflussrichtung vor dem AC-Trennorgan ein AC-Kurzschlussschalter angeordnet.

Aus der Druckschrift US 2018 / 210022 A ist eine Photovoltaik (PV) - Anlage mit einer Lichtbogendetektionsvorrichtung bekannt. In der PV-Anlage ist ein PV-String über erste Stromleitungen, einen DC-DC-Wandler und weitere Stromleitungen mit einem Leistungswandler verbunden. Die Lichtbogendetektionsvorrichtung umfasst Kondensatoren, die Umgehungsstrompfade für den DC-DC-Wandler bilden, und einen Stromsensor, der auf einer der weiteren Stromleitungen zwischen dem DC/DC-Wandler und dem Leistungswandler angeordnet ist.

Die Druckschrift DE 11 2012 007 202 T5 beschreibt ein Verfahren zum Betreiben eines Reglers für ein Maximum-Power-Point-Tracking (MPPT-Regler), der ausgelegt, ist, Leistung zwischen einem Eingangsanschluss und einem Ausgangsanschluss zu übertragen mit den folgenden Schritten:
- In einem ersten Betriebsmodus des MPPT-Reglers: Betreiben einer ersten Schaltvorrichtung des MPPT-Reglers bei einem festen Tastverhältnis; und
- In einem zweiten Betriebsmodus des MPPT-Reglers: Veranlassen einer Regel-Schaltvorrichtung des MPPT-Reglers, wiederholt zwischen ihren leitenden und nichtleitenden Zuständen umzuschalten, um eine Leistung, die aus einer an den Eingangsanschluss elektrisch angeschlossenen PV-Vorrichtung entnommen wird, zu maximieren.

Die Druckschrift US 2016 181781 A1 offenbart einen PV-String mit einer Vielzahl von elektrisch in Reihe geschalteten PV-Modulen mit einem ersten Ende und einem zweiten Ende. Eine Stromleitung mit einer ersten Stringschutzeinheit ist mit dem ersten Ende und eine Rückleitung mit einer zweiten Stringschutzeinheit mit dem zweiten Ende elektrisch verbunden. Eine der Stringschutzeinheiten umfasst eine Mehrzahl von Schutzeinrichtungen ausgewählt aus einem Überstromschutz, einem Lichtbogenfehlerschutz, einem Rückstromschutz und einem Erdfehlerschutz. Die andere der Stringschutzeinheiten umfasst eine Mehrzahl von Schutzeinrichtungen ausgewählt aus einem Überstromschutz, einem Lichtbogenfehlerschutz, einem Rückstromschutz, einem Erdschlussschutz und einem ferngesteuerten Schalter in Reihe mit der Stromleitung oder der Rückleitung.

Aus der Druckschrift DE 101 36 147 A1 ist eine PV-Anlage mit einer Vielzahl von PV-Modulen und ihnen zugeordneten DC/DC-Wandlern bekannt, die ausgangsseitig parallel zueinander mit einem zentralen Wechselrichter verbunden sind. Der Wechselrichter wandelt eine von den DC/DC-Wandlern erzeugte Zwischenkreis-Gleichspannung in eine sinusförmige Wechselspannung um. Dabei sind die PV-Module durch ihre individuellen DC/DC-Wandler elektrisch entkoppelt.

Die Druckschrift US 2012 / 0319489 A1 offenbart ein photovoltaisches (PV) Array-System mit mehreren PV-Strings, bei dem jeder PV-String mit einem ersten Anschluss eines String-Equalizer-Moduls in Reihe geschaltet ist. Das String-Equalizer-Modul kann eine Spannung eines Arbeitspunktes maximaler Leistung des PV-Strings ausgleichen, bevor die PV Strings kombiniert werden, um eine einzelne, zusammengesetzte DC-Busspannung auf einem DC-Bus zu erzeugen. Um dies zu erreichen, können PV-Strings Strom von anderen PV-Strings aufnehmen oder zu anderen PV-Strings abgeben, um die Spannung des Arbeitspunktes maximaler Leistung jedes entsprechenden PV-Strings auszugleichen.

### Aufgabe der Erfindung

Der Erfindung liegt die Aufgabe zugrunde, ein Verfahren zum Betrieb einer EEA mit mehreren parallel zueinander angeschlossenen DC-Teilgeneratoren anzugeben, mit dem in einem Fehlerfall eine Beschädigung der EEA sicher vermieden wird. Konkret soll eine fehlerbehaftete DC-Quelle eines DC-Teilgenerators möglichst über ein Auslösen einer Sicherung von den restlichen fehlerfrei operierenden DC-Quellen getrennt werden. Dabei soll jedoch der resultierende Fehlerstrom so kontrolliert werden, dass eine Beschädigung überstromsensitiver Komponenten der EEA in jedem Fall - auch dann, wenn ein Auslösen der Sicherung nicht möglich ist - ausgeschlossen ist. Es ist zudem Aufgabe der Erfindung, eine zur Durchführung des Verfahrens geeignete EEA aufzuzeigen.

### Lösung

Die Aufgabe wird bei einem Verfahren der eingangs genannten Art wird erfindungsgemäß jeweils mit den Merkmalen eines der unabhängigen Patentansprüche 1 und 2 gelöst. Vorteilhafte Ausführungsformen des Verfahrens sind in den Ansprüchen 3 bis 6 genannt. Die Aufgabe, eine zur Durchführung des Verfahrens geeignete Energieerzeugungsanlage aufzuzeigen, wird erfindungsgemäß mit den Merkmalen des unabhängigen Anspruchs 7 gelöst. Vorteilhafte Ausführungsformen der Energieerzeugungsanlage sind in den Ansprüchen 8 bis 12 aufgeführt.

### Beschreibung der Erfindung

Ein erstes erfindungsgemäßes Verfahren zielt auf einen Betrieb einer Energieerzeugungsanlage (EEA) mit mehreren DC-Teilgeneratoren, die parallel zueinander jeweils über einen DC/DC-Wandler mit einer gemeinsamen DC-Last verbunden sind. Dabei weist jeder der DC-Teilgeneratoren zumindest eine DC-Quelle auf, die über zumindest eine in Reihe zu der DC-Quelle geschaltete Sicherung mit dem dem jeweiligen DC-Teilgenerator zugeordneten DC/DC-Wandler verbunden ist. Das Verfahren umfasst die Schritte:
- Überwachung jeder der DC-Teilgeneratoren auf einen Kurzschlussfehler,
- wobei dann, wenn die Überwachung der DC-Teilgeneratoren einen fehlerbehafteten DC-Teilgenerator indiziert,
diejenigen DC/DC-Wandler, die nicht dem fehlerbehafteten DC-Teilgenerator, sondern vielmehr einem fehlerfreien DC-Teilgenerator, zugeordnet sind, mit einem gemeinsamen Summenstrom I_{Rest} betrieben werden, der einem Vorgabewert entspricht. Dabei ist der Vorgabewert derart gewählt, dass ein über den Summenstrom I_{Rest} gebildetes Zeitintegral ein Grenzlast-Integral derjenigen Sicherung oder einer derjenigen Sicherungen überschreitet, die in Reihe zwischen der fehlerbehafteten DC-Quelle und dem der fehlerbehafteten DC-Quelle zugeordneten DC/DC-Wandler geschaltet ist / sind.

Ein zweites erfindungsgemäßes Verfahren zielt ebenfalls auf einen Betrieb einer Energieerzeugungsanlage mit mehreren DC-Teilgeneratoren, die parallel zueinander jeweils über einen DC/DC-Wandler mit einer gemeinsamen DC-Last verbunden sind. Dabei weist jeder der DC-Teilgeneratoren eine DC-Quelle auf, die über zumindest eine in Reihe zu der DC-Quelle geschaltete Sicherung mit dem dem jeweiligen DC-Teilgenerator zugeordneten DC/DC-Wandler verbunden ist. Das weitere erfindungsgemäße Verfahren umfasst die Schritte:
- Überwachung jeder der DC-Teilgeneratoren auf einen Kurzschlussfehler,
- wobei dann, wenn die Überwachung der DC-Teilgeneratoren einen fehlerbehafteten DC-Teilgenerator indiziert,
- diejenigen DC/DC-Wandler, die nicht dem fehlerbehafteten DC-Teilgenerator zugeordnet sind, mit einem gemeinsamen Summenstrom I_{Rest} betrieben werden, der einem Vorgabewert entspricht. Dabei ist der Vorgabewert derart gewählt, dass ein über den Summenstrom I_{Rest} gebildetes Zeitintegral ein Grenzlast-Integral einer überstromsensitiven Komponente des der fehlerbehafteten DC-Quelle zugeordneten DC/DC-Wandlers unterschreitet.

Jeder der DC-Teilgeneratoren kann eine DC-Quelle oder mehrere parallel zueinander mit dem entsprechenden DC/DC-Wandler verbundene DC-Quellen aufweisen. Dabei kann die Sicherung - bezogen auf eine Leistungsflussrichtung im normalen Betrieb der EEA - jeweils zwischen der DC-Quelle und dem DC/DC-Wandler angeordnet sein. Bei der Sicherung kann es sich lediglich um eine Sicherung, üblicherweise aber auch um eine Mehrzahl von Sicherungen handeln, die in einer Reihenschaltung zwischen der DC-Quelle und dem DC/DC-Wandler angeordnet sind. Dabei kann lediglich ein Pol der DC-Quelle über die eine Sicherung oder die Mehrzahl der in Reihe geschalteten Sicherungen mit dem entsprechenden DC/DC-Wandler verbunden sein. Es liegt jedoch auch im Rahmen der Erfindung, dass jeder der beiden Pole der DC-Quelle über eine Sicherung oder eine Mehrzahl von in Reihe geschalteten Sicherungen mit dem zugeordneten DC/DC-Wandler verbunden ist. Jeder der DC/DC-Wandler kann demnach eingangsseitig mit nur einer DC-Quelle verbunden sein. Alternativ ist es jedoch auch möglich, dass einer, mehrere oder auch jeder der DC/DC-Wandler eingangsseitig mit einer Vielzahl von parallel zueinander verschalteten DC-Quellen verbunden ist. Insbesondere dann, wenn zumindest einer der DC/DC-Wandler eingangsseitig mit mehreren DC-Quellen verbunden ist, kann innerhalb des entsprechenden DC-Teilgenerators ein Leistungsfluss der DC-Quellen kaskadiert in mehreren Stufen zusammengefasst werden. Jede einzelne Stufe kann eine separate Sicherung aufweisen. Beispielsweise kann eine sogenannte Hauptstring-Sicherung einen Generatorkasten absichern, der jeweils viele sogenannter String-Sicherungen enthält. Auf diese Weise können zwischen einer DC-Quelle und dem DC/DC-Wandler mehrere Sicherungen unterschiedlichen Typs in Reihe geschaltet sein. Hierbei kann eine Auslöseschwelle der Sicherungen mit zunehmendem Abstand von der DC-Quelle und mit abnehmendem Abstand zu dem DC/DC-Wandler zunehmen.

Eine Überwachung jeder der DC-Teilgeneratoren auf einen Fehler kann dadurch erfolgen, dass ein elektrischer Parameter der DC-Teilgeneratoren, insbesondere ein Strom und/oder eine Spannung zeitlich aufeinanderfolgend detektiert wird. Dabei ist es nicht erforderlich, dass jede der DC-Quellen innerhalb eines DC-Teilgenerators für sich separat überwacht wird. Insbesondere dann, wenn eine Mehrzahl von parallel zueinander verschalteten DC-Quellen als ein DC-Teilgenerator an einen gemeinsam genutzten DC/DC-Wandler angeschlossen ist, ist es ausreichend, die DC-Quellen in Gruppen zusammengefasst, mit anderen Worten den entsprechenden DC-Teilgenerator, zu überwachen. Bei der Überwachung kann beispielsweise detektiert werden, ob ein Rückstrom in einen fehlerbehafteten DC-Teilgenerator fließt, der von einem Kurzschlussfehler betroffen ist. Die Überwachung liefert dann zwar nicht unmittelbar die fehlerbehaftete DC-Quelle, aber dennoch denjenigen DC-Teilgenerator, der die fehlerbehaftete DC-Quelle beinhaltet.

Die Erfindung nutzt den Effekt, dass bei einem Fehler, insbesondere bei einem Kurzschlussfehler einer der DC-Quellen die Spannung der fehlerbehafteten DC-Quelle, wie auch die Spannung desjenigen DC-Teilgenerators, der die fehlerbehaftete DC-Quelle beinhaltet, zusammenbricht und einen Rückstrom aus nicht fehlerbehafteten DC-Quellen hervorruft. Die eingebrochene Spannung liegt eingangsseitig an dem der fehlerbehafteten DC-Quelle zugeordneten DC/DC-Wandler an, der somit nicht mehr in der Lage ist, ausgangsseitig eine Spannung bereitzustellen, die der ausgangsseitigen Spannung der restlichen DC/DC-Wandler entspricht, die eingangsseitig nicht mit einer fehlerbehafteten DC-Quelle oder einem fehlerbehafteten DC-Teilgenerator verbunden sind. Es ergibt sich somit ein resultierender Summenstrom I_{Rest} derjenigen DC/DC-Wandler, die nicht dem fehlerbehafteten DC-Teilgenerator zugeordnet sind, also eingangsseitig nicht mit dem fehlerbehafteten DC-Teilgenerator verbunden sind, in den fehlerbehafteten DC-Teilgenerator und dort insbesondere in die fehlerbehaftete DC-Quelle des fehlerbehafteten DC-Teilgenerators. Dabei fließt der Summenstrom I_{Rest} rückwärts - also der Stromrichtung im normalen Betrieb der EEA entgegengerichtet - über Freilaufdioden desjenigen DC/DC-Wandlers, der dem fehlerbehafteten DC-Teilgenerator zugeordnet ist.

Ein Fehler einer DC-Quelle kann sich bei der EEA auch so auswirken, dass ein Spannungseinbruch nicht nur an einem Ausgang desjenigen DC/DC-Wandlers erfolgt, der der fehlerbehafteten DC-Quelle zugeordnet ist. Vielmehr kann ein Spannungseinbruch auch an den Ausgängen aller anderen DC/DC-Wandler mehr oder weniger stark ausgeprägt vorhanden sein. In diesem Fall bricht die Spannung in einem gesamten DC-Bus der EEA auf einen kleinen Spannungswert zusammen. Dabei ist jedoch üblicherweise der Spannungseinbruch an demjenigen DC/DC-Wandler, der der fehlerbehafteten DC-Quelle zugeordnet ist, etwas stärker ausgeprägt, als die Spannungseinbrüche an den restlichen der DC/DC-Wandler, die nicht der fehlerbehafteten DC-Quelle zugeordnet sind, so dass auch hier der oben bereits beschriebene Summenstrom I_{Rest} von den fehlerfreien DC-Teilgeneratoren in den fehlerbehafteten DC-Teilgenerator resultiert,

Erfindungsgemäß werden nun diejenigen DC/DC-Wandler, die nicht einem fehlerbehafteten DC-Teilgenerator zugeordnet sind, mit dem Ziel betrieben, dass ihr gemeinsamer Summenstrom I_{Rest} einem Vorgabewert entspricht. Dies kann über eine koordinierte Regelung derjenigen DC/DC-Wandler erfolgen, die nicht dem fehlerbehafteten DC-Teilgenerator zugeordnet sind. Die koordinierte Regelung kann mittels einer auf alle DC/DC-Wandler wirkenden Steuerungseinheit erfolgen. Bei der koordinierten Regelung ist von der Steuerungseinheit der einzuregelnde Vorgabewert zu berücksichtigen. Weiterhin können der Steuereinheit die Ströme aller an der koordinierten Regelung beteiligten DC/DC-Wandler im Einzelnen vorliegen. Dies ist jedoch nicht zwingend erforderlich. Vielmehr ist es ausreichend, dass der Steuereinheit neben dem einzuregelnden Vorgabewert der gemeinsame Summenstrom I_{Rest} der an der koordinierten Regelung beteiligten DC/DC-Wandler vorliegt. Dabei kann der gemeinsame Summenstrom I_{Rest} gegebenenfalls auch einen Anteil beinhalten, der von der DC-Last in Richtung desjenigen DC/DC-Wandlers fließt, der dem fehlerbehafteten DC-Teilgenerator zugeordnet ist. Da so während der koordinierten Regelung weniger Werte gemessen und/oder kommuniziert werden müssen, kann die koordinierte Regelung insgesamt vereinfacht werden und die entsprechende Steuerungseinheit einfacher ausgelegt werden. Ein dem Summenstrom I_{Rest} entsprechender Fehlerstrom fließt somit nicht unkontrolliert, sondern wird insbesondere in seiner Stromstärke derart kontrolliert, dass der Summenstrom I_{Rest} dem Vorgabewert entspricht. Der Vorgabewert kann dabei so gewählt werden, dass eine Beschädigung einer überstromsensitiven Komponente der EEA, insbesondere desjenigen DC/DC-Wandlers, der dem fehlerbehafteten DC-Teilgenerator zugeordnet ist, oder, was gleichbedeutend ist, der der fehlerbehafteten DC-Quelle zugeordnet ist, ausgeschlossen ist. Bei der überstromsensitiven Komponente kann es sich insbesondere um eine Freilaufdiode des entsprechenden DC/DC-Wandlers handeln. Über den Vorgabewert kann der Summenstrom I_{Rest} einerseits nach oben hin begrenzt werden. Indem die betreffenden DC/DC-Wandler mit dem Ziel geregelt werden, dass der gemeinsamen Summenstrom I_{Rest} dem Vorgabewert entspricht, erfolgt andererseits jedoch gleichzeitig auch eine Begrenzung des Summenstroms I_{Rest} nach unten hin. Konkret kann dabei der Vorgabewert so gewählt werden, dass die in Reihe zu dem DC/DC-Wandler und der fehlerbehafteten DC-Quelle geschaltete Sicherung, oder - im Falle mehrerer Sicherungen - eine oder mehrere der in Reihe zu dem DC/DC-Wandler und der fehlerhaften DC-Quelle geschalteten Sicherungen zuverlässig auslösen. Dabei wird schaltungsbedingt vorteilhafterweise bei einem DC-Teilgenerator mit mehreren parallel zueinander geschalteten DC-Quellen diejenige Sicherung zuerst auslösen, die der fehlerbehafteten DC-Quelle am nächsten ist, da sie üblicherweise relativ zu den weiteren Sicherungen innerhalb des DC-Teilgenerators einerseits sowohl eine relativ geringe Auslöseschwelle aufweist, und andererseits nicht nur von dem außerhalb des fehlerbehafteten DC-Teilgenerators erzeugten Summenstrom I_{Rest}, sondern zusätzlich auch von einem innerhalb des fehlerbehafteten DC-Teilgenerators erzeugten Fehlerstrom durchflossen wird. Der innerhalb des fehlerbehafteten DC-Teilgenerators erzeugte Fehlerstrom ist im Allgemeinen jedoch deutlich geringer als der außerhalb des fehlerbehafteten DC-Teilgenerators erzeugte Summenstrom I_{Rest}. Beide Ströme addieren sich und unterstützen so das gewünschte Auslösen der Sicherung im Fehlerfall.

Die Stromstärke des Summenstroms I_{Rest} kann über einen geeigneten Betrieb derjenigen DC/DC-Wandler, die zu dem Summenstrom I_{Rest} beitragen, auf den Vorgabewert geregelt oder eingestellt werden. Hierzu kann für alle DC/DC-Wandler ein über den DC/DC-Wandler fließender Strom detektiert und der übergeordneten Steuerungseinheit übermittelt werden. Die übergeordnete Steuerungseinheit kann die detektierten Ströme derjenigen DC/DC-Wandler aufsummieren, die nicht einem fehlerbehafteten DC-Teilgenerator zugeordnet sind und hieraus den aktuell vorliegenden Summenstrom I_{Rest} ermitteln. Durch einen Vergleich des aktuell vorliegenden Summenstroms I_{Rest} mit dem Vorgabewert kann die Steuerungseinheit die betreffenden DC/DC-Wandler mit dem Ziel ansteuern, dass der Summenstrom I_{Rest} dem Vorgabewert entspricht. Dabei kann dann, wenn der Summenstrom I_{Rest} den Vorgabewert überschreitet oder zu überschreiten droht, zumindest ein Strom (I₂ - Iₙ) durch einen jeweiligen der DC/DC-Wandler, die nicht dem fehlerbehafteten DC-Teilgenerator zugeordnet sind, reduziert werden. Alternativ können jedoch auch mehrere oder alle Ströme (I₂ - Iₙ) durch die jeweiligen der DC/DC-Wandler reduziert werden, um den Summenstrom I_{Rest} auf den Vorgabewert einzustellen. Umgekehrt kann dann, wenn der Summenstrom I_{Rest} den Vorgabewert unterschreitet oder zu unterschreiten droht, zumindest ein Strom (I₂ - Iₙ) durch einen jeweiligen der DC/DC-Wandler, gegebenenfalls auch mehrere oder alle der Ströme durch die jeweiligen der DC/DC Wandler, die nicht dem fehlerbehafteten DC-Teilgenerator zugeordnet sind, erhöht werden.

In einer vorteilhaften Ausführungsform des Verfahrens kann bei der Überwachung der DC-Teilgeneratoren auf einen Fehler bei allen DC/DC-Wandlern jeweils ein über den DC/DC-Wandler fließender Strom detektiert werden. Dabei kann ein fehlerbehafteter DC-Teilgenerator dann indiziert werden, wenn der von dem dem DC-Teilgenerator zugeordneten DC/DC-Wandler in Richtung zur DC-Last fließende Strom einen Strom-Schwellwert I_{TH} unterschreitet, oder insbesondere dann, wenn der von dem dem DC-Teilgenerator zugeordneten DC/DC-Wandler in Richtung zur DC-Last fließende Strom seine Stromrichtung wechselt. Dabei wird ein von dem DC/DC-Wandler in Richtung der DC-Last fließender Strom als positiver Strom und ein aus Richtung der DC-Last zu dem DC/DC-Wandler fließender Strom als negativer Strom gewertet. Gemäß dieser Definition indiziert ebenfalls ein über den DC/DC-Wandler in Richtung der DC-Last fließender negativer Strom, dass an dem betreffenden DC/DC-Wandler eingangsseitig ein fehlerbehafteter DC-Teilgenerator angeschlossen ist. Bei der Detektion des über den DC/DC-Wandler fließenden Stroms kann ein Eingangsstrom oder ein Ausgangsstrom des DC/DC-Wandlers detektiert werden.

Alternativ oder kumulativ zur Detektion eines über den DC/DC-Wandler fließenden Stroms ist es ebenso möglich, zur Überwachung der DC-Teilgeneratoren auf einen Fehler jeweils eine Spannung des DC-Teilgenerators zu detektieren. In diesem Fall wird ein fehlerbehafteter DC-Teilgenerator dann indiziert, wenn die an dem DC-Teilgenerator detektierte Spannung einen Spannungs-Schwellwert U_{TH} unterschreitet. Die Detektion der Spannungen kann dabei vorteilhafterweise eingangsseitig an den den jeweiligen DC-Teilgeneratoren zugeordneten DC/DC-Wandlern erfolgen. Alternativ können jedoch auch die Ausgangsspannungen der DC/DC-Wandler detektiert werden. Vorteilhafterweise können bei der Detektion der Spannungen, wie auch bei der Detektion der Ströme, Messeinheiten genutzt werden, die ohnehin in den DC/DC-Wandlern verfügbar sind.

In dem zweiten erfindungsgemäßen Verfahren ist der Vorgabewert derart gewählt, dass ein über den Summenstrom I_{Rest} gebildetes Zeitintegral ein Grenzlast-Integral einer überstromsensitiven Komponente des der fehlerbehafteten DC-Quelle zugeordneten DC/DC-Wandlers oder, was gleichbedeutend ist, des dem fehlerbehafteten DC-Teilgenerator zugeordneten DC/DC-Wandlers unterschreitet. Auf diese Weise wird verhindert, dass die überstromsensitive Komponente des DC/DC-Wandlers oder der DC/DC-Wandler als überstromsensitive Komponente beschädigt wird. In dem ersten erfindungsgemäßen Verfahren ist der Vorgabewert derart gewählt, dass ein über den Summenstrom I_{Rest} gebildetes Zeitintegral ein Grenzlast-Integral derjenigen Sicherung oder einer derjenigen Sicherungen überschreitet, die in Reihe zwischen der fehlerbehafteten DC-Quelle und dem der fehlerbehafteten DC-Quelle zugeordneten DC/DC-Wandler geschaltet ist / sind. Eine derartige Wahl des Vorgabewertes verfolgt das Ziel, die Sicherung auszulösen, und somit die fehlerbehaftete DC-Quelle von den restlichen nicht fehlerbehafteten DC-Quellen innerhalb des fehlerbehafteten DC-Teilgenerators, wie auch von den restlichen nicht fehlerbehafteten DC-Quellen außerhalb des fehlerbehafteten DC-Teilgenerators zu trennen.

Bei einem auftretenden Fehlerfall innerhalb der EEA können Situationen eintreten, bei denen ein Auslösen der Sicherung, die in Reihe zu der fehlerbehafteten DC-Quelle geschaltet ist, auch bei einer derartigen Wahl des Vorgabewertes nicht erfolgt. Dies kann beispielsweise durch Bauteiltoleranzen in Verbindung mit nah beieinanderliegenden Grenzlast-Integralen der überstromsensitiven Komponente und der Sicherung begünstigt werden. Auch in einem derartigen Fall kann der fehlerbehaftete DC-Teilgenerator jedoch auf einfache Weise von der gemeinsamen DC-Last und somit von den restlichen nicht fehlerbehafteten DC-Teilgeneratoren getrennt werden. Konkret können dann, wenn ein Auslösen der Sicherung bei dem gewählten Vorgabewert nicht erfolgt, diejenigen DC/DC-Wandler, die nicht einem fehlerbehafteten DC-Teilgenerator zugeordnet sind, deaktiviert werden, um den Summenstrom I_{Rest} auf einen Stromwert von 0A einzustellen. Auf diese Weise wird zwischen den DC/DC-Wandlern ein stromloser Zustand herbeigeführt, bei dem die fehlerbehaftete DC-Quelle oder der fehlerbehaftete DC-Teilgenerator über ein elektromechanisches Schaltorgan galvanisch von der gemeinsamen DC-Last getrennt werden kann. Derartige Schaltorgane sind bei den in Frage stehenden EEA ohnehin üblicherweise vorhanden. Da die Schalthandlung in einem stromlosen Zustand erfolgt, ist es jedoch nicht zwingend notwendig, dass die Schaltorgane lichtbogenlöschende Mittel aufweisen. Sie können daher deutlich kostengünstiger ausgelegt werden.

In einer vorteilhaften Ausführungsform des Verfahrens kann ein bei der Überwachung der DC-Teilgeneratoren indizierter Fehler, optional auch ein erfolgreiches oder ein nicht erfolgreiches Auslösen der Sicherung von der EEA signalisiert werden. Dies kann beispielsweise durch eine Kommunikationseinheit der EEA erfolgen. Auf diese Weise kann ein Betreiber der EEA entsprechend zeitnah über den Fehler und entsprechend erforderliche Reparaturmaßnahmen informiert werden. Er kann so schon im Vorfeld Vorkehrungen treffen, um eine Reparatur der fehlerbehafteten DC-Quelle bzw. der EEA möglichst effizient durchzuführen.

Eine erfindungsgemäße Energieerzeugungsanlage umfasst mehrere DC-Teilgeneratoren, die parallel zueinander jeweils über einen DC/DC-Wandler mit einer gemeinsamen DC-Last verbunden sind. Dabei weist jeder der DC-Teilgeneratoren eine DC-Quelle auf, die über zumindest eine in Reihe zu der DC-Quelle geschaltete Sicherung mit dem dem jeweiligen DC-Teilgenerator zugeordneten DC/DC-Wandler verbunden ist. Als kennzeichnendes Merkmal weist die Energieerzeugungsanlage weiterhin eine Steuerungseinheit auf, die ausgelegt und eingerichtet ist, das erfindungsgemäße Verfahren durchzuführen. Bei der Steuerungseinheit kann es sich um eine separat ausgebildete Steuerungseinheit der EEA handeln. Alternativ oder kumulativ ist es jedoch auch möglich, dass die Steuerungseinheit innerhalb einer Steuerungseinheit eines DC/DC-Wandlers oder innerhalb mehrerer Steuerungseinheiten der DC/DC-Wandler enthalten ist. Mit anderen Worten kann die Steuerungseinheit somit auch auf die Steuerungseinheiten mehrerer DC/DC-Wandler der EEA verteilt vorliegen. Es ergeben sich die bereits im Zusammenhang mit dem Verfahren erwähnten Vorteile.

In einer vorteilhaften Ausführungsform der EEA weisen die DC-Teilgeneratoren jeweils mehrere DC-Quellen auf, die parallel zueinander über zumindest eine Sicherung mit dem dem jeweiligen DC-Teilgenerator zugeordneten DC/DC-Wandler verbunden sind. Dabei können die DC-Quellen auch jeweils über eine Reihenschaltung mehrere Sicherungen mit dem dem jeweiligen DC-Teilgenerator zugeordneten DC/DC-Wandler verbunden sein. In diesem Fall kann eine Auslöseschwelle bzw. das Grenzlast-Integral der Sicherungen zunehmen, je weiter die Sicherung in der Reihenschaltung von der DC-Quelle entfernt ist, oder, was gleichbedeutend ist, je näher die Sicherung in der Reihenschaltung bei dem entsprechenden DC/DC-Wandler angeordnet ist. In einer weiteren Ausführungsform der EEA können die DC-Quellen eines oder auch mehrerer DC-Teilgeneratoren einen Photovoltaik (PV) - String und/oder eine Batterie umfassen. Weiterhin kann die gemeinsame DC-Last insbesondere einen Elektrolyseur umfassen.

Die EEA kann einen Tiefsetzsteller als DC/DC-Wandler umfassen. Konkret können dabei ein DC/DC-Wandler, mehrere oder gegebenenfalls auch alle DC/DC-Wandler der EEA jeweils einen Tiefsetzsteller umfassen und/oder jeweils einen DC/DC-Wandler umfassen, der eine tiefsetzende Funktion aufweist, also ausgelegt und eingerichtet ist, eine Eingangsspannung in eine kleinere Ausgangsspannung zu wandeln. Die überstromsensitive Komponente des der fehlerbehafteten DC-Quelle zugeordneten DC/DC-Wandlers, oder, was gleichbedeutend ist, des dem fehlerbehafteten DC-Teilgenerator zugeordneten DC/DC-Wandlers kann eine separate parallel zu einem Halbleiterschalter des DC/DC-Wandlers angeschlossene Freilaufdiode umfassen. Alternativ kann die überstromsensitive Komponente des DC/DC-Wandlers auch einen Halbleiterschalter des DC/DC-Wandlers, insbesondere eine Body-Diode des Halbleiterschalters umfassen.

### Kurzbeschreibung der Figuren

Im Folgenden wird die Erfindung mithilfe von Figuren dargestellt. Von diesen zeigen
- **Fig. 1**: eine erfindungsgemäße EEA in einer ersten Ausführungsform;
- **Fig. 2**: eine erfindungsgemäße EEA in einer zweiten Ausführungsform;
- **Fig. 3**: ein Ablaufdiagramm des erfindungsgemäßen Verfahrens.

### Figurenbeschreibung

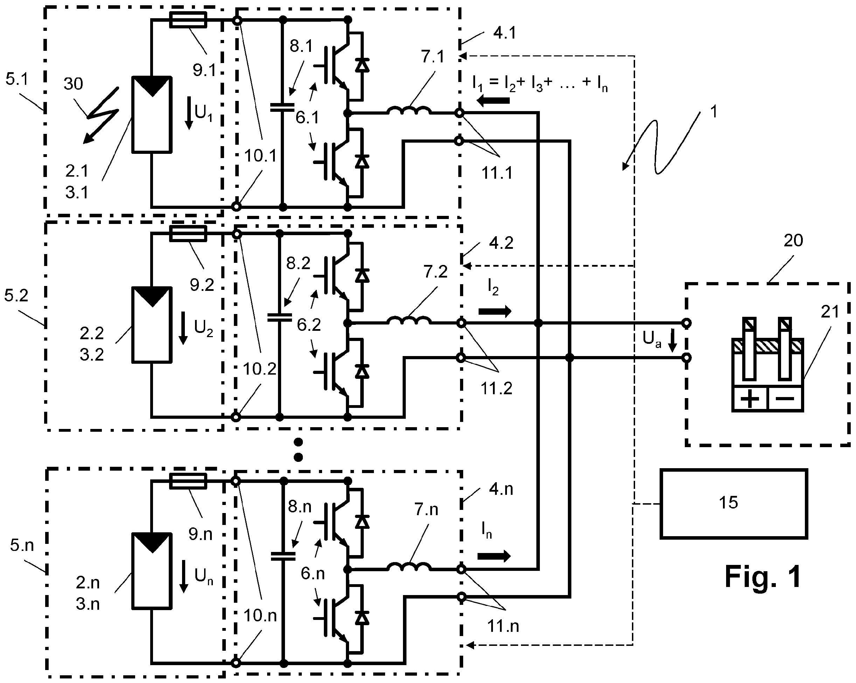

In **Fig. 1** ist eine erfindungsgemäße EEA 1 in einer ersten Ausführungsform dargestellt. Die EEA 1 umfasst mehrere DC-Teilgeneratoren 5.1 - 5.n, die parallel zueinander über jeweils einen DC/DC-Wandler 4.1 - 4.n mit einer gemeinsamen DC-Last 20, hier exemplarisch als Elektrolyseur 21 illustriert, verbunden sind. Die EEA 1 umfasst weiterhin eine Steuerungseinheit 15 zur Steuerung der DC/DC-Wandler 4.1 - 4.n. Die Steuerungseinheit 15 ist eingerichtet, Messwerte für Strom und oder Spannung, die von Messeinheiten der DC/DC-Wandler 4.1 - 4.n detektiert werden, zu empfangen und auszuwerten. Die Steuerungseinheit 15 ist weiterhin dazu eingerichtet, allein oder aber in Verbindung mit in den DC/DC-Wandlern 4.1 - 4.n vorhandenen Steuereinheiten die einzelnen der DC/DC-Wandler 4.1 - 4.n mit dem Ziel zu regeln, dass der gemeinsame, von den einzelnen der DC/DC-Wandler 4.1 - 4.n generierte Summenstrom I_{Rest} einem Vorgabewert entspricht. Die DC/DC-Wandler 4.1 - 4.n sind in Fig. 1 exemplarisch als Tiefsetzsteller mit jeweils einem Eingang 10.1 - 10.n, einer mit dem Eingang 10.1 - 10.n verbundenen Eingangskapazität 8.1 - 8.n, zwei Halbleiterschaltern 6.1 - 6.n und einer mit einem Ausgang 11.1 - 11.n des DC/DC-Wandlers 4.1 - 4.n verbundenen Induktivität 7.1 - 7.n dargestellt. Erfindungsgemäß ist es jedoch auch möglich, dass als DC/DC-Wandler 4.1 - 4.n ein beliebiger DC/DC-Wandler verwendet werden kann, der eine tiefsetzende Funktion aufweist, also eine an dem Eingang 10.1 - 10.n anliegende Eingangsspannung U₁ - Uₙ in eine kleinere, an dem Ausgang 11.1 - 11.n anliegende Ausgangsspannung Uₐ wandeln kann. In der Ausführungsform gemäß Fig. 1 beinhaltet jeder der DC-Teilgeneratoren 5.1 - 5.n lediglich eine DC-Quelle 2.1 - 2.n, die über eine Sicherung 9.1 - 9.n mit dem Eingang 10.1 - 10.n des ihr zugeordneten DC/DC-Wandlers 4.1 - 4.n verbunden ist. Jede der DC-Quellen 2.1 - 2.n ist beispielhaft als Photovoltaik (PV) - String 3.1 - 3.n dargestellt. Es ist jedoch auch möglich, dass eine oder mehrere der DC-Quellen 2.1 - 2.n als Batterie ausgebildet sind.

In einem normalen Betrieb der EEA 1 werden die als PV-String 3.1 - 3.n ausgelegten DC-Quellen 2.1 - 2.n in ihrem jeweiligen Arbeitspunkt maximaler Leistung (MPP = Maximum PowerPoint) betrieben. Hierbei wird eine dem jeweiligen MPP zugeordnete Spannung U₁ - Uₙ der DC-Quelle 2.1 - 2.n, die an einem Eingang 10.1 - 10.n des ihr zugeordneten DC/DC-Wandlers 4.1 - 4.n anliegt, in eine gemeinsame Ausgangsspannung Uₐ gewandelt. Mit der Ausgangsspannung Uₐ wird der Elektrolyseur 21 als gemeinsame DC-Last 20 versorgt. Auf diese Weise wird gewährleistet, dass stets die maximal mögliche regenerative Leistung von der EEA 1 umgewandelt und der DC-Last 20 zugeführt wird.

Im normalen Betrieb der EEA 1 werden die DC-Teilgeneratoren 5.1 - 5.n auf einen möglichen Fehler 30, beispielsweise einen möglichen Kurzschlussfehler überwacht. Die Überwachung erfolgt in Fig. 1 derart, dass ohnehin in den DC/DC-Wandlern 4.1 - 4.n vorhandene Messeinrichtungen (in Fig. 1 nicht gezeigt) genutzt werden. Über die Messeinrichtungen können jeweils eine am Eingang 10.1 - 10.n der DC/DC-Wandler 4.1 - 4.n anliegende Spannung U₁ - Uₙ und/oder ein über den Ausgang 11.1 - 11.n der DC/DC-Wandler 4.1 - 4.n in Richtung der DC-Last 20 fließender Strom I₁ - Iₙ erfasst werden. Wenn eine der an den Eingängen 10.1 - 10.n anliegenden Spannungen U₁ - Uₙ einen Spannungs-Schwellwert U_{TH} unterschreitet und/oder einer der über den Ausgang der DC/DC-Wandler 4.1 - 4.n in Richtung der DC-Last 20 fließenden Ströme I₁ - Iₙ einen Strom-Schwellwert I_{TH} unterschreitet, wird dies der Steuerungseinheit 15 von dem entsprechenden DC/DC-Wandler 4.1 - 4.n signalisiert. Kumulativ oder alternativ dazu ist es auch möglich, die Werte der detektierten Ströme I₁ - Iₙ und Spannungen U₁ - Uₙ der übergeordneten Steuerungseinheit 15 zu übermitteln, die diese dann selbst auswertet und eine Indikation eines Fehlers 30 erkennt.

In Fig. 1 ist beispielhaft ein als Kurzschlussfehler ausgebildeter Fehler 30 an der DC-Quelle 2.1 eines der DC-Teilgeneratoren 5.1 - 5.n - hier des DC-Teilgenerators 5.1 - illustriert. Aufgrund des Kurzschlussfehlers bricht die Spannung U₁ der fehlerbehafteten DC-Quelle 2.1 auf einen sehr kleinen Absolutwert ein. Der dem fehlerbehafteten DC-Teilgenerator 5.1 zugeordnete DC/DC-Wandler 4.1 oder, was gleichbedeutend ist, der der fehlerbehafteten DC-Quelle 2.1 zugeordnete DC/DC-Wandler 4.1 ist in diesem Fall nicht mehr in der Lage, die eingangsseitig anliegende Spannung U₁, wie die restlichen DC/DC-Wandler 4.2 - 4.n, auf den gemeinsamen Wert Uₐ zu wandeln. Vielmehr liegt nun auch am Ausgang des der fehlerbehaften DC-Quelle 2.1 zugeordneten DC/DC-Wandlers 4.1 eine Ausgangsspannung an, die deutlich kleiner als der gemeinsame Wert Uₐ ist. Manchmal kann es sein, dass nicht nur die Ausgangsspannung desjenigen DC/DC-Wandlers 4.1 einbricht, der der fehlerbehafteten DC-Quelle 2.1 zugeordnet ist. Vielmehr kann es auch möglich sein, dass sich in Reaktion auf die eine fehlerbehaftete DC-Quelle 2.1 ein Spannungseinbruch an einem gesamten DC-Bus der EEA 1 ausbildet, also auch an denjenigen DC/DC-Wandlern 4.2 - 4.n vorhanden ist, die nicht der fehlerbehafteten DC-Quelle 2.1 zugeordnet sind. Dabei ist jedoch der Spannungseinbruch der Ausgangsspannung an dem DC/DC-Wandler 4.1, der der fehlerbehafteten DC-Quelle 2.1 zugeordnet ist, etwas stärker ausgeprägt, als die Spannungseinbrüche an den anderen DC/DC-Wandlern 4.2 - 4.n. Aufgrund des zumindest etwas stärker ausgeprägten Spannungseinbruches an dem Ausgang 11.1 des DC/DC-Wandlers 2.1 ergibt sich ein Summenstrom I_{Rest} gemäß I_{Rest} = I₂ + I₃ + ... + Iₙ derjenigen DC/DC-Wandler 4.2 - 4.n, die jeweils einem fehlerfreien DC-Teilgenerator 5.2 - 5.n zugeordnet sind, in Richtung des DC/DC-Wandlers 2.1, der der fehlerbehafteten DC-Quelle 2.1 zugeordnet ist. Ohne weitere Maßnahmen kann der Summenstrom I_{Rest} solche Werte annehmen, die überstromsensitive Komponenten des betroffenen DC/DC-Wandlers 2.1 irreversibel schädigen können. Dies ist insbesondere dann der Fall, wenn eine in Reihe zu der fehlerbehafteten DC-Quelle 2.1 geschaltete Sicherung 9.1 nicht, oder nicht rechtzeitig auslöst, um den Fehlerstrom zu unterbrechen.

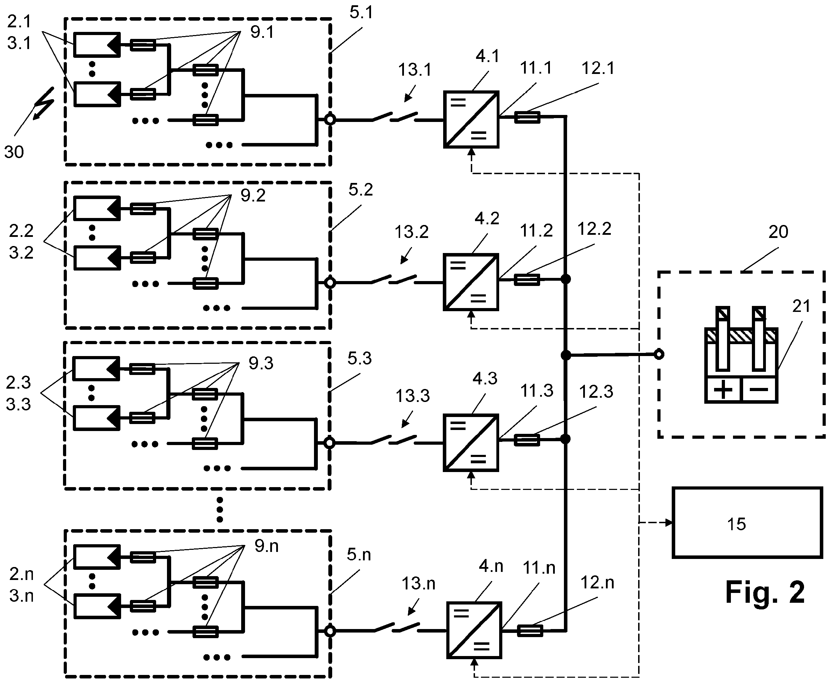

Gemäß der Erfindung wird der Fehler 30 von der Steuerungseinheit 15 auf Basis der detektierten Ströme I₁ - Iₙ und/oder Spannungen U₁ - Uₙ erkannt. In Reaktion darauf werden die DC/DC-Wandler 4.2 - 4.n, die einem fehlerfreien DC-Teilgenerator 5.2 - 5.n zugeordnet sind, von der Steuerungseinheit 15 mit dem Ziel betrieben, dass der von ihnen erzeugte gemeinsame Summenstrom I_{Rest} gemäß I_{Rest} = I₂ + I₃ + ... + Iₙ einen Vorgabewert annimmt. Dabei kann nicht nur der Vorgabewert selbst, sondern auch die jeweiligen Ströme I₂ - Iₙ, die die einzelnen DC/DC-Wandler 4.2 - 4.n zur Erreichung des gemeinsamen Vorgabewertes beisteuern, von vornherein vorgegeben sein. Dabei ist der Vorgabewert so gewählt, dass einerseits eine Beschädigung einer überstromsensitiven Komponente des DC/DC-Wandlers 4.1, der mit dem fehlerbehafteten DC-Teilgenerator 5.1 verbunden ist, ausgeschlossen ist. Konkret kann der Vorgabewert so gewählt sein, dass er kleiner als ein Grenzlast-Integral der überstromsensitiven Komponente des entsprechenden DC/DC-Wandlers 2.1 ist. Andererseits ist der Vorgabewert jedoch möglichst so (hoch) gewählt, dass eine der fehlerbehafteten DC-Quelle 2.1 nachgeschaltete Sicherung 9.1 sicher auslöst und somit die fehlerbehaftete DC-Quelle 2.1 von den restlichen fehlerfreien DC-Quellen 2.2 - 2.n trennt. Da es sich bei den DC/DC-Wandlern 4.1 - 4.n der EEA 1 um DC/DC-Wandler handelt, die für eine tiefsetzende Funktion ausgelegt und eingerichtet sind, sind die DC/DC-Wandler 4.2 - 4.n auch dann in der Lage, einen ausreichend hohen Summenstrom I_{Rest} an ihrem Ausgang bereit zu stellen, wenn eine Einstrahlung auf die als PV-Strings 3.1 - 3.n ausgebildeten DC-Quellen 2.2 - 2.n relativ gering ist. Sollte die der fehlerbehafteten DC-Quelle 2.1 nachgeschaltete Sicherung 9.1 vor Überschreiten des Grenzlast-integral der überstromsensitiven Komponente des betreffenden DC/DC-Wandlers 4.1 einmal nicht auslösen, so wird eine Beschädigung der überstromsensitiven Komponente dadurch vermieden, dass der Summenstrom I_{Rest} durch einen geeigneten Betrieb der restlichen DC/DC-Wandler 4.2 - 4.n auf einen Wert von 0 A eingestellt wird. Insbesondere können dabei die restlichen DC/DC-Wandler 4.2 - 4.n deaktiviert werden. Der fehlerbehaftete DC-Teilgenerator 5.1 kann dann im stromlosen Zustand über eine in Fig. 1 nicht dargestellte DC-Trenneinheit (ähnlich der in Figur 2 dargestellten DC-Trenneinheiten 13.1 - 13.n) dauerhaft galvanisch von der gemeinsamen DC-Last 20 und den restlichen fehlerfreien DC-Teilgeneratoren 5.2 - 5.n getrennt werden. Danach kann die EEA 1 ohne den defekten DC-Teilgenerator 5.1, jedoch mit den restlichen fehlerfreien DC-Teilgeneratoren 5.2 - 5.n, weiter betrieben werden. Der abgetrennte DC-Teilgenerator 5.1 bzw. dessen fehlerbehaftete DC-Quelle 2.1 kann dabei ohne Gefahr repariert werden und danach wieder mit der EEA 1 verbunden werden.

Obwohl in Fig. 1 nur ein fehlerbehafteter DC-Teilgenerator 5.1 dargestellt ist, ist das Verfahren auch auf einen Fall mit mehreren gleichzeitig vorhandenen fehlerbehafteten DC-Teilgeneratoren übertragbar. Dies gilt zumindest so lange, wie eine Anzahl der fehlerfreien DC-Teilgeneratoren eine Anzahl der fehlerbehafteten DC-Teilgeneratoren überwiegt.

In **Fig. 2** ist eine zweite Ausführungsform einer erfindungsgemäßen EEA 1 dargestellt, die in vielen Merkmalen der in der Fig. 1 dargestellten EEA 1 ähnelt. Aus Gründen der Knappheit wird daher lediglich auf die Unterschiede zu der ersten Ausführungsform der EEA 1 eingegangen, während hinsichtlich der gleichartigen Merkmale auf die Beschreibungen unter Fig. 1 verwiesen wird.

Die in Fig. 2 dargestellte EEA 1 weist ebenfalls mehrere DC-Teilgeneratoren 5.1 - 5.n auf, die jeweils über einen DC/DC-Wandler 4.1 - 4.n parallel zueinander mit einer gemeinsamen DC-Last 20 verbunden sind. Im Unterschied zu Fig. 1 umfasst jeder der DC-Teilgeneratoren 5.1 - 5.n in Fig. 2 jedoch eine Vielzahl von DC-Quellen 2.1 - 2.n, die jeweils parallel zueinander und jeweils über eine Reihenschaltung mehrere Sicherungen 9.1 - 9.n an denjenigen DC/DC-Wandler 4.1 - 4.n angeschlossen sind, der dem jeweiligen DC-Teilgenerator 5.1 - 5.n zugeordnet ist. Dabei nimmt ein Grenzlast-Integral der Sicherungen 9.1 - 9.n innerhalb jeder der Reihenschaltungen mit zunehmender Entfernung der Sicherung 9.1 - 9.n von der ihr zugeordneten DC-Quelle 2.1 - 2.n zu. Zwischen jedem der DC-Teilgeneratoren 5.1 - 5.n und dem ihm zugeordneten DC/DC-Wandler 4.1 -4.n ist weiterhin eine DC-Trenneinheit 13.1 - 13.n angeordnet, mit der der entsprechende DC-Teilgenerator 5.1 - 5.n von dem ihm zugeordneten DC/DC-Wandler 4.1 - 4.n galvanisch getrennt werden kann. Dabei können die DC-Trenneinheiten 13.1 - 13.n vorteilhafterweise frei von Mitteln zur Löschung eines Lichtbogens und daher relativ kostengünstig ausgelegt sein.

Auch in Fig. 2 werden Ströme I₁ - Iₙ und/oder Spannungen U₁ - Uₙ der DC-Teilgeneratoren 5.1 - 5.n von (in Fig. 2 nicht dargestellten) Messeinheiten der DC/DC-Wandler 4.1 - 4.n detektiert und der Steuerungseinheit 15 übermittelt. Sollte einer der Ströme I₁ - Iₙ und/oder eine der Spannungen U₁ - Uₙ den entsprechenden der Schwellwerte ITH, UTH unterschreiten, so indiziert dies einen Fehler 30 des entsprechenden DC-Teilgenerators 5.1 - 5.n. In Fig. 2 ist exemplarisch ein als Kurzschlussfehler ausgebildeter Fehler 30 in dem oberen DC-Teilgenerator 5.1, und dort bei der unteren der dargestellten DC-Quellen 2.1 illustriert. Auch hier bricht die Eingangsspannung desjenigen DC/DC-Wandlers 4.1 zusammen, der der fehlerbehafteten DC-Quelle 2.1 und somit auch dem fehlerbehafteten DC-Teilgenerator 5.1 zugeordnet oder - mit anderen Worten - eingangsseitig mit dieser/diesem verbunden ist. Der betreffende DC/DC-Wandler 4.1 ist nicht mehr in der Lage, eine den restlichen DC/DC-Wandlern 4.2 - 4.n gleiche Ausgangsspannung Uₐ an seinem Ausgang 10.1 zu stellen, vielmehr bricht dort die Spannung ebenfalls ein. Resultierend darauf speisen die nicht fehlerbehafteten DC/DC-Wandler 5.2 - 5.n auch hier einen Summenstrom I_{Rest} in den einen fehlerbehafteten DC/DC-Wandler 5.1.

Ähnlich zu dem bereits im Zusammenhang mit Fig. 1 beschriebenen Verfahren, wird der Fehler 30 durch die Überwachung der DC-Teilgeneratoren 5.1 - 5.n von der Steuerungseinheit 15 erkannt. In Reaktion darauf werden die restlichen DC/DC-Wandler 4.2 - 4.n, die jeweils einem fehlerfreien DC-Teilgenerator 5.2 - 5.n zugeordnet sind, über die Steuerungseinheit 15 mit dem Ziel betrieben, dass der von ihnen generierte Summenstrom I_{Rest} einen Vorgabewert annimmt. Auch in Fig. 2 ist der Vorgabewert so (niedrig) gewählt, damit einerseits eine überstromsensitive Komponente des dem fehlerhaften DC-Teilgenerator 5.1 zugeordneten DC/DC-Wandlers 4.1 geschützt wird und deren Beschädigung vermieden wird. Andererseits ist er jedoch auch so (hoch) gewählt, dass eine innerhalb der Reihenschaltung von Sicherungen 9.1 zwischen der fehlerbehafteten DC-Quelle 2.1 und dem nachgeschalteten DC/DC-Wandler 4.1 angeordnete Sicherung 9.1 auslöst. Da das Grenzlast-Integral der Sicherungen 9.1 innerhalb der Reihenschaltung mit abnehmendem Abstand von der fehlerbehafteten DC-Quelle 2.1 abnimmt, ist ein Auslösen gerade der Sicherung am wahrscheinlichsten, die unmittelbar der fehlerbehafteten DC-Quelle 2.1 nachgeschaltet ist. Vorteilhafterweise handelt es sich dabei üblicherweise auch gleichzeitig um die kostengünstigste der Sicherungen 9.1 innerhalb der Reihenschaltung.

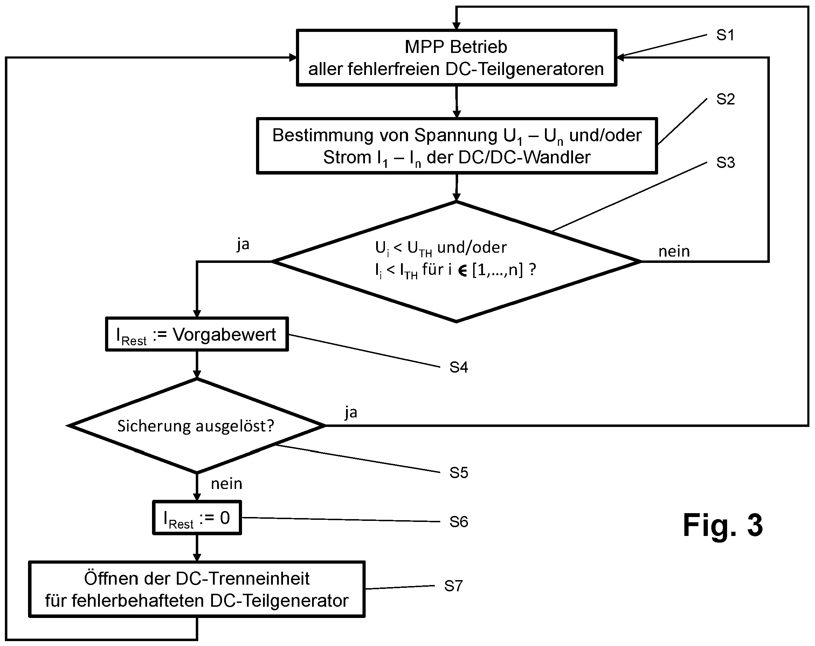

Die **Fig. 3** zeigt eine Variante des erfindungsgemäßen Verfahrens in Form eines Flussdiagramms, wie es mit der EEA 1 gemäß Fig. 1 oder der EEA 1 gemäß Fig. 2 durchgeführt werden kann. Das Verfahren startet in einem ersten Schritt S1 mit einem MPP Betrieb aller fehlerfreien DC-Teilgeneratoren 5.1 - 5.n. Da am Anfang des Verfahrens beispielhaft davon ausgegangen wird, dass es keine fehlerbehafteten DC-Quellen 2.1, und damit auch keine fehlerbehafteten DC-Teilgeneratoren 5.1 gibt, entspricht am Anfang die Anzahl aller fehlerfreien DC-Teilgeneratoren auch der Anzahl aller verfügbaren DC-Teilgeneratoren 5.1 - 5.n der EEA 1. In einem zweiten Schritt S2 werden alle DC-Teilgeneratoren 5.1 - 5.n der EEA 1, die sich aktuell im Betrieb befinden, auf einen Fehler 30 überwacht. Die Überwachung erfolgt dadurch, dass jeweils eine Spannung U₁ - Uₙ der DC-Teilgeneratoren 5.1 - 5.n und/oder ein über den Ausgang 11.1 - 11.n der DC/DC-Wandler 4.1 - 4.n in Richtung der DC-Last 20 fließender Strom I₁ - Iₙ detektiert und der Steuerungseinheit 15 übermittelt wird. In einem dritten Schritt S3 überprüft die Steuerungseinheit 15, ob einer der detektierten Spannungen U₁ - Uₙ einen Spannungs-Schwellwert U_{TH} und/oder einer der detektierten Ströme I₁ - Iₙ einen Strom-Schwellwert I_{TH} unterschreitet. Ist dies nicht der Fall, springt das Verfahren zu dem ersten Schritt S1 zurück. Wird hingegen der Spannungs-Schwellwert U_{TH} von einer der detektierten Spannungen U₁ - Uₙ und/oder der Strom-Schwellwert I_{TH} von einem der detektierten Ströme I₁ - Iₙ unterschritten, so wird gemäß dem Verfahren indiziert, dass es sich bei demjenigen DC-Teilgenerator 5.1 - 5.n mit der unterschreitenden Spannung Uₖ und/oder dem unterschreitenden Strom Iₖ (mit k=1... n) um einen fehlerbehafteten DC-Teilgenerator 5.k handelt, der eine fehlerhafte DC-Quelle 2.k aufweist. In diesem Fall springt das Verfahren zu einem vierten Schritt S4, bei dem alle restlichen im Betrieb befindlichen DC/DC-Wandler 4.1 - 4.n, die nicht dem fehlerbehafteten DC-Teilgenerator 5.k zugeordnet sind, über die Steuerungseinheit 15 mit dem Ziel betrieben werden, dass ihr Summenstrom I_{Rest} einen Vorgabewert annimmt. Hierdurch wird der Summenstrom I_{Rest} sowohl nach oben hin als auch nach unten hin begrenzt. In einem fünften Schritt S5 wird überprüft, ob der Summenstrom I_{Rest} in der Lage war, eine der fehlerbehafteten DC-Quelle 2.k nachgeschaltete Sicherung 9.k auszulösen. Dies kann beispielsweise durch Detektion von Strom Iₖ und/oder Spannung Uₖ des dem fehlerbehafteten DC-Teilgenerator 5.k zugeordneten DC/DC-Wandlers 4.k überprüft werden. Dabei kann davon ausgegangen werden, dass die Sicherung 9.k nicht ausgelöst hat, wenn ein über den Ausgang 11.k des DC/DC-Wandler 4.k in Richtung der DC-Last fließende Strom Iₖ weiterhin den Strom-Schwellwertes I_{TH} unterschreitet und/oder eine an dem Eingang 11.k des DC/DC-Wandlers 4.k anliegende Spannung Uₖ weiterhin den Spannungs-Schwellwert U_{TH} unterschreitet. Ist dies hingegen nicht der Fall, so geht das Verfahren davon aus, dass die der fehlerbehafteten DC-Quelle 2.k nachgeschaltete Sicherung 9.k ausgelöst hat und hierdurch die fehlerbehaftete DC-Quelle 2.k von der gemeinsamen DC-Last 20 getrennt wurde. Der zuvor als fehlerbehafteter DC-Teilgenerator 5.k indizierte DC-Teilgenerator weist nach Auslösen der Sicherung 9.k wieder ausschließlich fehlerfreie DC-Quellen 2.k auf, kann also daher wieder als fehlerfreier DC-Teilgenerator bezeichnet und auch weiter betrieben werden. Entsprechend springt das Verfahren bei ausgelöster Sicherung 9.k zu dem ersten Schritt S1 zurück, bei dem wieder alle fehlerfreien DC-Teilgeneratoren in ihrem MPP betrieben werden. Die Anzahl der DC-Teilgeneratoren entspricht weiterhin der Anzahl der insgesamt vorhandenen Teilgeneratoren der EEA 1. Allerdings hat der zuvor als fehlerhaft identifizierte DC-Teilgenerator 5.k nun zumindest eine DC-Quelle 2.k weniger. Wird in dem fünften Schritt S5 hingegen geschlossen, dass eine der fehlerbehaftete DC-Quelle 2.k nachgeschaltete Sicherung 9.k nicht ausgelost hat, so werden in einem sechsten Schritt S6 alle restlichen DC/DC-Wandler4.1 - 4.n, die nicht dem fehlerbehafteten DC-Teilgenerator 5.k zugeordnet sind, deaktiviert, wodurch ihr Summenstrom I_{Rest} den Wert 0A annimmt. Danach wird in einem siebten Schritt S7 der fehlerbehaftete DC-Teilgenerator 5.k über die ihm zugeordnete DC-Trenneinheit 13.k von der gemeinsamen DC-Last 20 und von den restlichen fehlerfreien DC-Teilgeneratoren galvanisch getrennt. Daraufhin springt das Verfahren zum ersten Schritt S1, bei dem wieder alle fehlerfreien DC-Teilgeneratoren in ihrem jeweiligen MPP betrieben werden. Allerdings wird die EEA 1 nun ohne den zuvor als fehlerbehaftet identifizierten DC-Teilgenerator 5.k weiter betrieben, die Anzahl der fehlerfreien Teilgeneratoren hat sich in diesem Fall um 1 verringert.

### Bezugszeichenliste

- 1: Energieerzeugungsanlage (EEA)
- 2.1 - 2.n: DC-Quelle
- 3.1 - 3.n: Photovoltaik (PV) - String
- 4.1 - 4.n: DC/DC-Wandler
- 5.1 - 5.n: DC-Teilgenerator
- 6.1 - 6.n: Halbleiterschalter
- 7.1 - 7.n: Induktivität
- 8.1 - 8.n: Eingangskapazität
- 9.1 - 9.n: Sicherung
- 10.1 - 10.n: Eingang
- 11.1 - 11. n: Ausgang
- 12.1 - 12.n: Sicherung
- 13.1 - 13.n: DC-Trenneinheit
- 15: Steuerungseinheit
- 20: DC-Last
- 21: Elektrolyseur
- 30: Fehler
- S1-S7: Verfahrensschritt

## Patentansprüche

1. Verfahren zum Betrieb einer Energieerzeugungsanlage (EEA; 1) mit mehreren DC-Teilgeneratoren (5.1 - 5.n), die parallel zueinander und jeweils über einen DC/DC-Wandler (4.1 - 4.n) mit einer gemeinsamen DC-Last (20) verbunden sind, wobei jeder der DC-Teilgeneratoren (5.1 - 5.n) eine DC-Quelle (2.1 - 2.n) aufweist, die über zumindest eine in Reihe zu der DC-Quelle (2.1 - 2.n) geschaltete Sicherung (9.1 - 9.n) mit dem dem jeweiligen DC-Teilgenerator (5.1 - 5.n) zugeordneten DC/DC-Wandler (4.1 - 4.n) verbunden ist,
**mit den Schritten:**
- Überwachung jeder der DC-Teilgeneratoren (5.1 - 5.n) auf einen Kurzschlussfehler,
- wobei dann, wenn die Überwachung der DC-Teilgeneratoren (5.1 - 5.n) einen fehlerbehafteten DC-Teilgenerator (5.1) indiziert,
- diejenigen DC/DC-Wandler (4.2 - 4.n), die nicht dem fehlerbehafteten DC-Teilgenerator (5.1) zugeordnet sind, mit einem gemeinsamen Summenstrom I_{Rest} betrieben werden, der einem Vorgabewert entspricht,
- wobei der Vorgabewert derart gewählt ist, dass ein über den Summenstrom I_{Rest} gebildetes Zeitintegral ein Grenzlast-Integral derjenigen Sicherung (9.1) oder einer derjenigen Sicherungen (9.1) überschreitet, die in Reihe zwischen der fehlerbehafteten DC-Quelle (2.1) und dem der fehlerbehafteten DC-Quelle (2.1) zugeordneten DC/DC-Wandler (4.1) geschaltet ist / sind, um diese Sicherung (9.1) auszulösen.

2. Verfahren zum Betrieb einer Energieerzeugungsanlage (EEA; 1) mit mehreren DC-Teilgeneratoren (5.1 - 5.n), die parallel zueinander und jeweils über einen DC/DC-Wandler (4.1 - 4.n) mit einer gemeinsamen DC-Last (20) verbunden sind, wobei jeder der DC-Teilgeneratoren (5.1 - 5.n) eine DC-Quelle (2.1 - 2.n) aufweist, die über zumindest eine in Reihe zu der DC-Quelle (2.1 - 2.n) geschaltete Sicherung (9.1 - 9.n) mit dem dem jeweiligen DC-Teilgenerator (5.1 - 5.n) zugeordneten DC/DC-Wandler (4.1 - 4.n) verbunden ist,
**mit den Schritten:**
- Überwachung jeder der DC-Teilgeneratoren (5.1 - 5.n) auf einen Kurzschlussfehler,
- wobei dann, wenn die Überwachung der DC-Teilgeneratoren (5.1 - 5.n) einen fehlerbehafteten DC-Teilgenerator (5.1) indiziert,
- diejenigen DC/DC-Wandler (4.2 - 4.n), die nicht dem fehlerbehafteten DC-Teilgenerator (5.1) zugeordnet sind, mit einem gemeinsamen Summenstrom I_{Rest} betrieben werden, der einem Vorgabewert entspricht,
- wobei der Vorgabewert derart gewählt ist, dass ein über den Summenstrom I_{Rest} gebildetes Zeitintegral ein Grenzlast-Integral einer überstromsensitiven Komponente des der fehlerbehafteten DC-Quelle (2.1) zugeordneten DC/DC-Wandlers (4.1) unterschreitet.

3. Verfahren nach einem der vorangehenden Ansprüche, wobei
- bei der Überwachung der DC-Teilgeneratoren (5.1 - 5.n) jeweils ein über den DC/DC-Wandler (4.1 - 4.n) fließender Strom (I₁ - Iₙ) detektiert wird, und wobei eine fehlerbehaftete DC-Quelle (2.1) dann indiziert wird, wenn der von dem zugeordneten DC/DC-Wandler (4.1) in Richtung zur DC-Last (20) fließende Strom (I₁) einen Strom-Schwellwert I_{TH} unterschreitet, insbesondere dann, wenn der von dem zugeordneten DC/DC-Wandler (4.1) in Richtung zur DC-Last (20) fließende Strom (I₁) seine Stromrichtung wechselt, und/oder
- wobei zur Überwachung der DC-Teilgeneratoren (5.1 - 5.n) jeweils eine Spannung (U₁ - Uₙ) der DC-Teilgeneratoren (5.1 - 5.n) detektiert wird, und wobei ein fehlerbehafteter DC-Teilgenerator (5.1) dann indiziert wird, wenn die detektierte Spannung U₁ des DC-Teilgenerators (5.1) einen Spannungs-Schwellwert U_{TH} unterschreitet.

4. Verfahren nach Anspruch 3, wobei als detektierter über den DC/DC-Wandler (4.1 - 4.n) fließender Strom (I₁ - Iₙ) ein Eingangsstrom oder ein Ausgangsstrom des DC/DC-Wandlers (4.1 - 4.n) detektiert wird.

5. Verfahren nach einem der vorangehenden Ansprüche, wobei der Vorgabewert derart gewählt ist, dass ein über den Summenstrom I_{Rest} gebildetes Zeitintegral ein Grenzlast-Integral derjenigen Sicherung (9.1) oder einer derjenigen Sicherungen (9.1) überschreitet, die in Reihe zwischen der fehlerbehafteten DC-Quelle (2.1) und dem der fehlerbehafteten DC-Quelle (2.1) zugeordneten DC/DC-Wandler (4.1) geschaltet ist / sind, um diese Sicherung (9.1) auszulösen, wobei dann, wenn ein Auslösen der Sicherung (9.1) bei dem gewählten Vorgabewert nicht erfolgt, die DC/DC-Wandler (4.2 -4.n), die nicht dem fehlerbehafteten DC-Teilgenerator (5.1) zugeordnet sind, deaktiviert werden, um den Summenstrom I_{Rest} auf einen Stromwert von 0A einzustellen, und optional der fehlerbehaftete DC-Teilgenerator (5.1) von der gemeinsamen DC-Last (20) über eine DC-Trenneinrichtung (13.1) getrennt wird.

6. Verfahren nach einem der vorangehenden Ansprüche, wobei ein bei der Überwachung der DC-Teilgeneratoren (5.1 - 5.n) indizierter Fehler (30), optional auch ein erfolgreiches oder nicht erfolgreiches Auslösen der Sicherung (9.1) von der EEA (1), insbesondere von einer Kommunikationseinheit der EEA (1) signalisiert wird.

7. Energieerzeugungsanlage (EEA; 1) mit mehreren DC-Teilgeneratoren (5.1 - 5.n), die parallel zueinander jeweils über einen DC/DC-Wandler (4.1 - 4.n) mit einer gemeinsamen DC-Last (20) verbunden sind, wobei jeder der DC-Teilgeneratoren (5.1 - 5.n) eine DC-Quelle (2.1 - 2.n) aufweist, die über zumindest eine in Reihe zu der DC-Quelle (2.1 - 2.n) geschaltete Sicherung (9.1 - 9.n) mit dem dem jeweiligen DC-Teilgenerator (5.1 - 5.n) zugeordneten DC/DC-Wandler (4.1 - 4.n) verbunden ist, **dadurch gekennzeichnet, dass** die Energieerzeugungsanlage (1) weiterhin eine Steuerungseinheit (15) aufweist, die ausgelegt und eingerichtet ist, ein Verfahren nach einem der vorangehenden Ansprüche durchzuführen.

8. Energieerzeugungsanlage (1) nach Anspruch 7, wobei die DC-Teilgeneratoren (5.1 - 5.n) jeweils mehrere DC-Quellen (2.1 - 2.n) aufweisen, die parallel zueinander über zumindest eine Sicherung mit dem dem jeweiligen DC-Teilgenerator (5.1 - 5.n) zugeordneten DC/DC-Wandler (4.1 - 4.n) verbunden sind.

9. Energieerzeugungsanlage (1) nach Anspruch 7 oder 8, wobei die DC-Quellen (2.1 - 2.n) einen Photovoltaik (PV) - String (3.1 -3.n) und/oder eine Batterie umfassen.

10. Energieerzeugungsanlage (1) nach einem der Ansprüche 7 bis 9, wobei die gemeinsame DC-Last (20) einen Elektrolyseur (21) umfasst.

11. Energieerzeugungsanlage (1) nach einem der Ansprüche 7 bis 10, wobei die DC/DC-Wandler (4.1 - 4.n) einen Tiefsetzsteller umfassen und/oder wobei die DC/DC-Wandler (4.1 - 4.n) für eine tiefsetzende Funktion ausgelegt und eingerichtet sind.

12. Energieerzeugungsanlage (1) nach einem der Ansprüche 7 bis 11, wobei die überstromsensitive Komponente des der fehlerbehafteten DC-Quelle (2.1) zugeordneten DC/DC-Wandlers (4.1) eine separate parallel zu einem Halbleiterschalter (6.1) des DC/DC-Wandlers (4.1) angeschlossene Freilaufdiode oder einen Halbleiterschalter (6.1) des DC/DC-Wandlers (4.1), insbesondere eine Body-Diode des Halbleiterschalters (6.1), umfasst.

## Claims

1. A method for operating an energy generating system (EEA; 1) comprising a plurality of DC sub-generators (5.1 - 5.n) which are connected in parallel with one another and in each case to a shared DC load (20) via a DC/DC converter (4.1 - 4.n), each of the DC sub-generators (5.1 - 5.n) comprising a DC source (2.1 - 2.n) which is connected, via at least one fuse (9.1 - 9.n) that is connected in series to the DC source (2.1 - 2.n), to the DC/DC converter (4.1 - 4.n) that is assigned to the respective DC sub-generator (5.1 - 5.n),
**comprising the steps of:**
- monitoring each of the DC sub-generators (5.1 - 5.n) for a short-circuit fault,
- wherein, if the monitoring of the DC sub-generators (5.1 - 5.n) indicates a faulty DC sub-generator (5.1),
- the DC/DC converters (4.2 - 4.n) that are not assigned to the faulty DC sub-generator (5.1) are operated at a common total current I_{Rest} which corresponds to a default value
- wherein the default value is selected such that a time integral formed from the total current I_{Rest} exceeds an i2t value of the fuse (9.1) or of one of those fuses (9.1) that is / are connected in series between the faulty DC-source (2.1) and the DC/DC converter (4.1) that is assigned to the faulty DC source (2.1), in order to trip this fuse (9.1).

2. A method for operating an energy generating system (EEA; 1) comprising a plurality of DC sub-generators (5.1 - 5.n) which are connected in parallel with one another and in each case to a shared DC load (20) via a DC/DC converter (4.1 - 4.n), each of the DC sub-generators (5.1 - 5.n) comprising a DC source (2.1 - 2.n) which is connected, via at least one fuse (9.1 - 9.n) that is connected in series to the DC source (2.1 - 2.n), to the DC/DC converter (4.1 - 4.n) that is assigned to the respective DC sub-generator (5.1 - 5.n),
**comprising the steps of:**
- monitoring each of the DC sub-generators (5.1 - 5.n) for a short-circuit fault,
- wherein, if the monitoring of the DC sub-generators (5.1 - 5.n) indicates a faulty DC sub-generator (5.1),
- the DC/DC converters (4.2 - 4.n) that are not assigned to the faulty DC sub-generator (5.1) are operated at a common total current I_{Rest} which corresponds to a default value,
- wherein the default value is selected such that a time integral formed from the total current I_{Rest} falls below an i2t value of an overcurrent-sensitive component of the DC/DC converter (4.1) that is assigned to the faulty DC source (2.1).

3. Method according to any one of the preceding claims, wherein
- when monitoring the DC sub-generators (5.1 - 5.n), a current (I₁ - Iₙ) flowing via the DC/DC converter (4.1 - 4.n) is detected in each case, and wherein a faulty DC source (2.1) is indicated when the current (I₁) flowing from the assigned DC/DC converter (4.1) in the direction of the DC load (20) falls below a current threshold value I_{TH}, in particular when the current (I₁) flowing from the assigned DC/DC converter (4.1) in the direction of the DC load (20) changes its current direction, and/or
- wherein, for monitoring the DC sub-generators (5.1 - 5.n), a voltage (U₁ - Uₙ) of the DC sub-generators (5.1 - 5.n) is detected in each case, and wherein a faulty DC sub-generator (5.1) is indicated when the detected voltage U₁ of the DC sub-generator (5.1) falls below a voltage threshold value U_{TH}.

4. Method according to Claim 3, wherein an input current or an output current of the DC/DC converter (4.1 - 4.n) is detected as the detected current (I₁ - Iₙ) flowing via the DC/DC converter (4.1 - 4.n).

5. Method according to any one of the preceding claims, wherein the default value is selected such that a time integral formed from the total current I_{Rest} exceeds an i2t value of the fuse (9.1) or of one of those fuses (9.1) that is / are connected in series between the faulty DC-source (2.1) and the DC/DC converter (4.1) that is assigned to the faulty DC source (2.1), in order to trip this fuse (9.1),
- wherein, when tripping of the fuse (9.1) at the selected default value does not take place, the DC/DC converters (4.2 - 4.n) that are not assigned to the faulty DC sub-generator (5.1) are deactivated in order to set the total current I_{Rest} to a current value of 0 A, and wherein, optionally, the faulty DC sub-generator (5.1) is separated from the shared DC load (20) via a DC separation device (13.1).

6. Method according to any one of the preceding claims, wherein a fault (30) indicated during monitoring of the DC sub-generators (5.1 - 5.n), optionally also a successful or unsuccessful tripping of the fuse (9.1), is signaled by the EEA (1), in particular by a communication unit of the EEA (1).

7. Energy generating system (EEA; 1) comprising a plurality of DC sub-generators (5.1 - 5.n) which are connected in parallel with one another and in each case to a shared DC load (20) via a DC/DC converter (4.1 - 4.n), wherein each of the DC sub-generators (5.1 - 5.n) comprises a DC source (2.1 - 2.n), which is connected, via at least one fuse (9.1 - 9.n) that is connected in series to the DC source (2.1 - 2.n), to the DC/DC converter (4.1 - 4.n) that is assigned to the respective DC sub-generator (5.1 - 5.n), **characterized in that** the energy generating system (1) furthermore comprises a control unit (15) which is designed and configured to carry out a method according to any one of the preceding claims.

8. Energy generating system (1) according to Claim 7, wherein the DC sub-generators (5.1 - 5.n) in each case comprise a plurality of DC sources (2.1 - 2.n), which are connected in parallel with one another via at least one fuse to the DC/DC converter (4.1 - 4.n) that is assigned to the respective DC sub-generator (5.1 - 5.n).

9. Energy generating system (1) according to Claim 7 or 8, wherein the DC sources (2.1 - 2.n) comprise a photovoltaic (PV) string (3.1 - 3.n) and/or a battery.

10. Energy generating system (1) according to any one of Claims 7 to 9, wherein the shared DC load (20) comprises an electrolyzer (21).

11. Energy generating system (1) according to any one of Claims 7 to 10, wherein the DC/DC converters (4.1 - 4.n) comprise a step-down converter and/or wherein the DC/DC converters (4.1 - 4.n) are designed and configured for a step-down function.

12. Energy generating system (1) according to any one of Claims 7 to 11, wherein the overcurrent-sensitive component of the DC/DC converter (4.1) that is assigned to the faulty DC source (2.1) comprises a separate freewheeling diode, which is connected in parallel with a semiconductor switch (6.1) of the DC/DC converter (4.1), or comprises a semiconductor switch (6.1) of the DC/DC converter (4.1), in particular a body diode of the semiconductor switch (6.1).

## Revendications

1. Procédé pour faire fonctionner un système de production énergétique (EEA ; 1) comportant plusieurs générateurs partiels DC (5.1 - 5.n) reliés à une charge DC commune (20) en parallèle les uns aux autres respectivement par un transducteur DC/DC (4.1 - 4.n), chacun des générateurs partiels DC (5. 1 - 5.n) ayant une source DC (2.1 - 2.n) reliée par au moins un fusible (9.1 - 9.n) monté en série avec la source DC (2.1 - 2.n) au transducteur DC/DC (4.1 - 4.n) associé au générateur partiel DC (5.1 - 5.n) respectif,
**comprenant les étapes suivantes :**
- surveillance de chacun des générateurs partiels DC (5.1 - 5.n) pour détecter un défaut de court-circuit,
- durant laquelle, lorsque la surveillance des générateurs partiels DC (5.1 - 5.n) indique un générateur partiel DC (5.1) défectueux,
- les transducteurs DC/DC (4.2 - 4.n) qui ne sont pas associés au générateur partiel DC (5.1) défectueux sont exploités avec un courant total commun I_{Rest} qui correspond à une valeur par défaut,
- la valeur par défaut étant choisie de telle sorte qu'une intégrale de temps formée par le courant total I_{Rest} dépasse une intégrale de charge limite du fusible (9.1) oud'un des fusibles (9.1) monté(s) en série entre la source DC (2.1) défectueuse et le transducteur DC/DC (4.1) associé à la source DC (2.1) défectueuse, afin de déclencher ce fusible (9.1).

2. Procédé pour faire fonctionner un système de production énergétique (EEA ; 1) comportant plusieurs générateurs partiels DC (5.1 - 5.n) reliés à une charge DC commune (20) en parallèle les uns aux autres respectivement par un transducteur DC/DC (4.1 - 4.n), chacun des générateurs partiels DC (5. 1 - 5.n) ayant une source DC (2.1 - 2.n) reliée par au moins un fusible (9.1 - 9.n) monté en série avec la source DC (2.1 - 2.n) au transducteur DC/DC (4.1 - 4.n) associé au générateur partiel DC (5.1 - 5.n) respectif,
**comprenant les étapes suivantes :**
- surveillance de chacun des générateurs partiels DC (5.1 - 5.n) pour détecter un défaut de court-circuit,
- durant laquelle, lorsque la surveillance des générateurs partiels DC (5.1 - 5.n) indique un générateur partiel DC (5.1) défectueux,
- les transducteurs DC/DC (4.2 - 4.n) qui ne sont pas associés au générateur partiel DC (5.1) défectueux sont exploités avec un courant total commun I_{Rest} qui correspond à une valeur par défaut,
- la valeur par défaut étant choisie de telle sorte qu'une intégrale de temps formée par le courant total I_{Rest} soit inférieure à une intégrale de charge limite d'un composant sensible aux surintensités du transducteur DC/DC (4.1) associé à la source DC (2.1) défectueuse.

3. Procédé selon l'une des revendications précédentes, dans lequel,
- lors de la surveillance des générateurs partiels DC (5.1 - 5.n), un courant (I₁ - Iₙ) passant par le transducteur DC/DC (4.1 - 4.n) est détecté, et une source DC défectueuse (2.1) est indiquée lorsque le courant (I₁) passant par le transducteur DC/DC associé (4. 1) en direction de la charge DC (20) passe en dessous d'une valeur limite de courant I_{TH}, en particulier lorsque le courant (I₁) circulant depuis le transducteur DC/DC (4.1) associé en direction de la charge DC (20) change de direction, et/ou
- dans lequel, pour la surveillance des générateurs partiels DC (5.1 - 5.n), une tension (U₁ - Uₙ) des générateurs partiels DC (5.1 - 5.n) est respectivement détectée, et dans lequel un générateur partiel DC (5.1) défectueux est indiqué lorsque la tension U₁ détectée du générateur partiel DC (5.1) est inférieure à une valeur limite de tension U_{TH}.

4. Procédé selon la revendication 3, dans lequel un courant d'entrée ou un courant de sortie du transducteur DC/DC (4.1 - 4.n) est détecté en tant que courant (I₁ - Iₙ) détecté circulant à travers le transducteur DC/DC (4.1 - 4.n).

5. Procédé selon l'une des revendications précédentes, dans lequel la valeur par défaut est choisie de telle sorte qu'une intégrale de temps formée par le courant total I_{Rest} dépasse une intégrale de charge limite du fusible (9.1) ou d'un des fusibles (9.1) monté(s) en série entre la source DC défectueuse (2.1) et le transducteur DC/DC (4.1) associé à la source DC défectueuse (2.1), afin de déclencher ce fusible (9.1), et dans lequel, si le fusible (9.1) ne se déclenche pas à la valeur par défaut sélectionnée, les transducteurs DC/DC (4.2 - 4.n) qui ne sont pas associés au générateur partiel DC (5.1) défectueux sont désactivés afin de régler le courant total IRest à une valeur de courant de 0A, et, en option, le string partiel DC (5.1) défectueux est séparé de la charge DC commune (20) par un dispositif de séparation DC (13.1).

6. Procédé selon l'une des revendications précédentes, dans lequel un défaut (30) indiqué lors de la surveillance des générateurs partiels DC (5.1 - 5.n), éventuellement aussi un déclenchement réussi ou non du fusible (9.1), est signalé par l'EEA (1), en particulier par une unité de communication de l'EEA (1).

7. Système de production énergétique (EEA ; 1) avec plusieurs générateurs partiels DC (5.1 - 5.n) reliés à une charge DC (20) commune en parallèle les uns aux autres respectivement par un transducteur DC/DC (4.1 - 4.n), chacun des générateurs partiels DC (5.1 - 5.n) ayant une source DC (2.1 - 2.n) reliée par au moins un fusible (9.1 - 9.n) monté en série avec la source DC (2.1 - 2.n) au transducteur DC/DC (4.1 - 4.n) associé au générateur partiel DC (5.1 - 5.n) respectif, **caractérisé en ce que** le système de production d'énergie (1) comporte en outre une unité de commande (15) qui est conçue et agencée pour exécuter un procédé selon l'une des revendications précédentes.

8. Système de production énergétique (1) selon la revendication 7, dans laquelle les générateurs partiels DC (5.1 - 5.n) présentent chacun plusieurs sources DC (2.1 - 2.n) reliées en parallèle les unes aux autres par au moins un fusible au transducteur DC/DC (4.1 - 4.n) associé au générateur partiel DC (5.1 - 5.n) respectif.

9. Système de production énergétique (1) selon la revendication 7 ou 8, dans laquelle les sources DC (2.1 - 2.n) comprennent un string photovoltaïque (PV) (3.1 - 3.n) et/ou une batterie.

10. Système de production énergétique (1) selon l'une des revendications 7 à 9, dans laquelle la charge DC commune (20) comprend un électrolyseur (21).

11. Système de production énergétique (1) selon l'une des revendications 7 à 10, dans laquelle les transducteurs DC/DC (4.1 - 4.n) comprennent un convertisseur abaisseur et/ou dans laquelle les transducteurs DC/DC (4.1 - 4.n) sont conçus et agencés pour une fonction abaisseur.

12. Système de production énergétique (1) selon l'une des revendications 7 à 11, dans laquelle le composant sensible aux surintensités du transducteur DC/DC (4.1) associé à la source DC (2.1) défectueuse comprend une diode de roue libre séparée connectée en parallèle à un commutateur à semi-conducteur (6.1) du transducteur DC/DC (4.1) ou un commutateur à semi-conducteur (6.1) du transducteur DC/DC (4.1), en particulier une diode de corps du commutateur à semi-conducteur (6.1).
